# EUROPEAN PATENT SPECIFICATION

(11) **EP 3 497 352 B1**
(45) Date of publication and mention of the grant of the patent: **06.07.2022**
(21) Application number: 16806277.6
(22) Date of filing: 11.08.2016
(51) Int. Cl.: F16H 9/18, B60H 1/32

(54) **DIRECT DRIVE UNIT COMPRESSOR SYSTEM**
VERDICHTERSYSTEM MIT DIREKTANTRIEBSEINHEIT
SYSTÈME DE COMPRESSEUR À UNITÉ D'ENTRAÎNEMENT DIRECT

(43) Date of publication of application: 19.06.2019
(73) Proprietor: Carrier Corporation, Palm Beach Gardens, FL 33418 (US)
(72) Inventor: MENARD, Cyril, 76520 Franqueville St Pierre (FR)
(74) Representative: Dehns
(86) International application number: PCT/IB2016/001335
(87) International publication number: WO 2018/029503

(56) References cited:
- WO-A1-2015/065643
- WO-A2-2011/047243
- WO-A2-2013/095895
- US-A1- 2011 177 903

## Description

### BACKGROUND OF THE INVENTION

The subject matter disclosed herein relates to a direct drive unit compressor system and, more particularly, to centrifugal speed-governing system for a direct drive compressor system.

Many goods need to be transported in a cargo space that is supplied with a stream of conditioned air. Typically, this conditioned air is refrigerated, but it may also or alternatively be heated. In order to achieve acceptable temperature uniformity within the cargo space, a jet of supply air is created that will ideally persist through the extent of the cargo space. This jet is often generated by a motorized fan that is fluidly receptive of cooled or heated air from a compressor of a transport refrigeration unit (TRU).

In a direct drive type of TRU, the compressor is driven by the engine of the truck by way of a belt. When the truck engine speed varies, however, the compressor speed varies and the cooling capacity of the TRU varies as well. At idle speed, the cooling capacity of the TRU may thus be very low and a time required to recover a refrigeration or cooling set point can be long.

WO 2013/095895 A2 discloses a transport refrigeration system for controlling temperature within a cargo box including a refrigerant vapor compression unit and a power supply system.

### BRIEF DESCRIPTION OF THE INVENTION

According to one aspect of the invention, a direct drive unit compressor system as claimed in claim 1 is provided.

According to another aspect of the invention, a method of operating a direct drive unit compressor system as claimed in claim 4 is provided.

These and other advantages and features will become more apparent from the following description taken in conjunction with the drawings.

### BRIEF DESCRIPTION OF THE DRAWINGS

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 is a side view of a truck in accordance with embodiments;
FIG. 2 is a schematic diagram illustrating an operation of a direct drive unit of the truck of FIG. 1;
FIG. 3 is a side view of gearing and a mech unit of a speed-governed transmission unit in accordance with alternative embodiments;
FIG. 4 is a side view of gearing and a mech unit of a speed-governed transmission unit in accordance with alternative embodiments; and
FIG. 5 is a flow diagram illustrating a method of operating a direct drive compressor system.

The detailed description explains embodiments of the invention, together with advantages and features, by way of example with reference to the drawings.

### DETAILED DESCRIPTION OF THE INVENTION

As will be described below, speed-governing transmission unit may be used in a direct drive unit compressor system in order to maintain an operational speed of the compressor independent of an operational speed of an engine powering the direct drive unit compressor system.

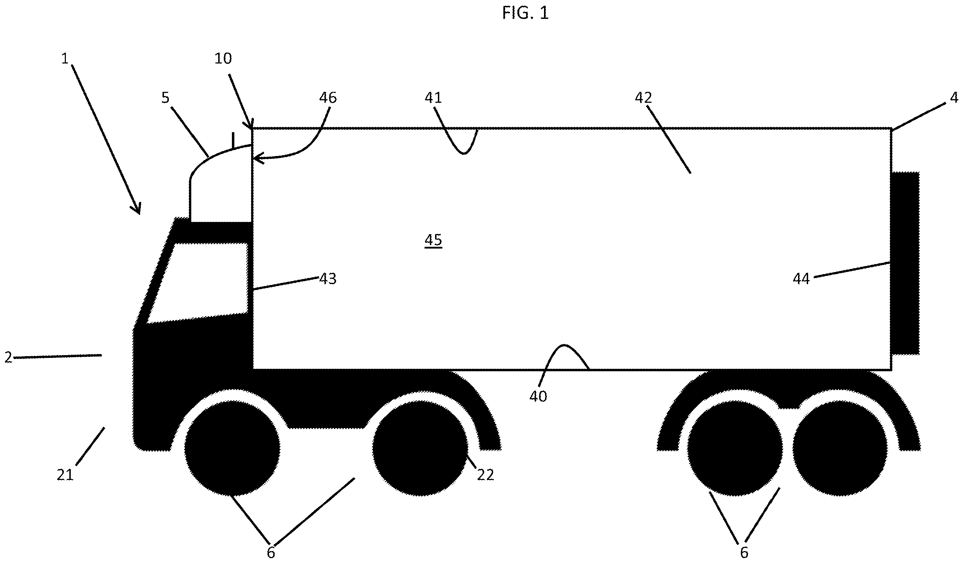

With reference to FIG. 1, an air supply system 10 is provided for use with a truck 1 or a cargo transportation vehicle. As shown in FIG. 1, the truck 1 may include a rig 2 that is formed of a cab portion 21 having an engine and a cabin in which a driver and one or more passengers can sit and a flat-bed portion 22, a trailer 4, a TRU 5 and a plurality of axle and wheel assemblies 6 that are provided along a longitudinal axis of the rig 2 and the trailer 4. The flat-bed portion 22 extends in the aft direction from a rear of the cab portion 21 and has an upper surface on which a front end of the trailer 4 can securely sit. The plurality of axle and wheel assemblies 6 may be provided as components of the rig 2 and the trailer 4.

The trailer 4 is a generally elongate, rectangular body or enclosure and includes a bottom wall 40, a top wall 41 opposite the bottom wall 40, opposed sidewalls 42 that extend substantially vertically between the bottom and top walls 40 and 41, a front end wall 43 and a rear end wall 44. The front and rear end walls 43 and 44 oppose one another and extend substantially vertically between the bottom and top walls 40 and 41 and substantially horizontally between the sidewalls 42. The trailer 4 may be substantially hollow and thus capable of storage of any type of cargo with the bottom wall 40, the top wall 41, the sidewalls 42 and the front and rear end walls 43 and 44 defining an interior 45. The rear end wall 44, for example, may include a hatch by which the interior 45 is accessible.

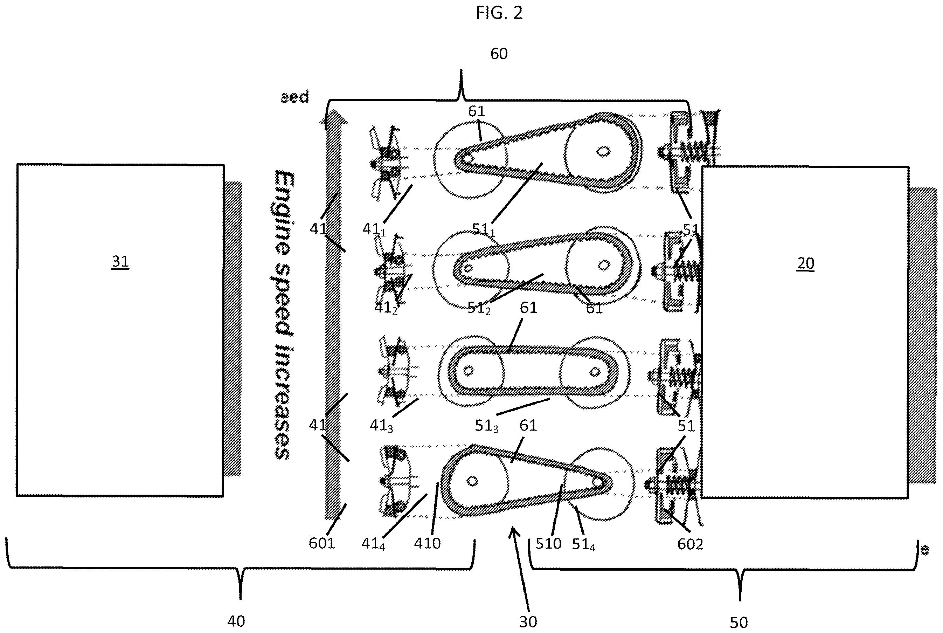

With continued reference to FIG. 1 and with additional reference to FIG. 2, the TRU 5 is generally configured to generate a jet of fluid flow to either cool or heat the interior 45 of the trailer 4 and may be provided at various positions relative to the interior 45. For purposes of clarity and brevity, however, the following description will relate only to the case of the TRU 5 being mounted on the rig 2 and thus provided at the front end wall 43 of the trailer 4 with access to the interior 45 by way of an opening 46 defined in the front end wall 4. The TRU 5 includes a compressor 20. That is, the TRU 5 may include a fan or impeller, a motor to drive the fan or impeller to rotate about a rotational axis and a duct in which the fan or impeller is seated to direct fluid flow generated by rotations of the fan or impeller toward the interior 45 as air conditioning.

As shown in FIG. 2, the air supply system 10 further includes a direct drive unit compressor system 30. The compressor system 30 includes an engine 31 (e.g., the engine of the truck 1 within the cab portion 21 of FIG. 1), the compressor 20, a power generation unit 40, a direct drive unit 50 and a speed-governed transmission unit 60. The engine 31 can be provided as a standalone component or as a component of the power generation unit 40, which, in either case, further includes a first power transfer device 41. The first power transfer device 41 is coupled to the engine 31 and is operable at varying speed modes 41₁, 41₂, 41₃ and 41₄, for example, based on a current (i.e., present) output of the engine 31 (although the varying speed modes 41₁, 41₂, 41₃ and 41₄, are illustrated in FIG. 2 as being discrete it is to be understood that the varying speed modes can be continuously variable or discrete). The compressor 20 can be provided as a standalone component or as a component of the direct drive unit 50, which, in either case, further includes a second power transfer device 51. The second power transfer device 51 is coupled to the compressor 20 and is operable at varying speed modes 51₁, 51₂, 51₃ and 51₄, for example, based on current (i.e., present) requirements of the compressor 20 (although the varying speed modes 51₁, 51₂, 51₃ and 51₄, are illustrated in FIG. 2 as being discrete it is to be understood that the varying speed modes can be continuously variable or discrete). The speed-governed transmission unit 60 is coupled to the first and second power transfer devices 41 and 51 and is configured to transmit power generated by the power generation unit 40 (e.g., the engine 31) to the direct drive unit 50 (e.g., the compressor 20) in proximate satisfaction of the current requirements of the compressor 20 and in proximate independence of the current output of the engine 31.

That is, as an operational speed of the engine 31 increases, the speed-governed transmission unit 60 is operably controlled to maintain an amount of power that is transmitted to the compressor 20 in order to drive operations of the compressor 20 and, by contrast, as the operational speed of the engine 31 decreases, the speed-governed transmission unit 60 is operably controlled to maintain an amount of power that is transmitted to the compressor 20 in order to drive operations of the compressor 20. In accordance with further embodiments, as the operational speed of the engine 31 changes, the speed-governed transmission unit 60 is operably controlled to maintain a substantially constant amount of power that is transmitted to the compressor 20 in order to drive operations of the compressor 20 at or near the current requirements thereof. Thus, if the compressor 20 has a certain power rating, the speed-governed transmission unit 60 is capable of facilitating operations of the compressor 20 at that power rating independent of a current output of the engine 31 (i.e., the current operational speed of the engine 31). As such, even if the engine 31 is idling and therefore generating relatively little power, the speed-governed transmission unit 60 can still transmit sufficient power to the compressor 20 in order to maintain continued operations thereof.

The first power transfer device 41 includes a first crank-shaft 410, which is rotatable about a first rotational axis at a first rotational speed that corresponds with an operational speed and current output of the engine 31, and the second power transfer device 51 includes a second crank-shaft 510, which is rotatable about a second rotational axis at a second rotational speed that can be set based on the current requirements of the compressor 20. These requirements may be varied based on current conditions of the interior 45 of the trailer 4 or substantially constant. In the former case, the second rotational speed of the crank-shaft 510 about the second rotational axis would need to be continuously or discretely variable and, in the latter case, the second rotational speed may be correspondingly substantially constant.

With continued reference to FIG. 2, the speed-governed transmission unit 60 may include a first gear assembly 601 of a continually varying size that is operably disposed on the first crank-shaft 410, a second gear assembly 602 of a continually varying size that is disposed on the second crank-shaft 510 and a belt 61 that is disposed to engage with the first and second gear assemblies 601 and 602.

At a low engine 31 speed, the first gear assembly 601 is narrowed and thus guides the belt 61 into a relatively large-diameter engagement. This large-diameter engagement locally slows the belt 61 down and causes the second gear assembly 602 to widen to thereby guide the belt 61 into a relatively small-diameter engagement that locally speeds the belt 61 up such that an operational speed of the compressor 20 is maintained. As the operational speed of the engine 31 increases, the first gear assembly 601 correspondingly widens such that local speeds of the belt 61 increase which results in the second gear assembly 602 narrowing such that local speeds of the belt 61 decrease such that the operational speed of the compressor 20 remains substantially constant.

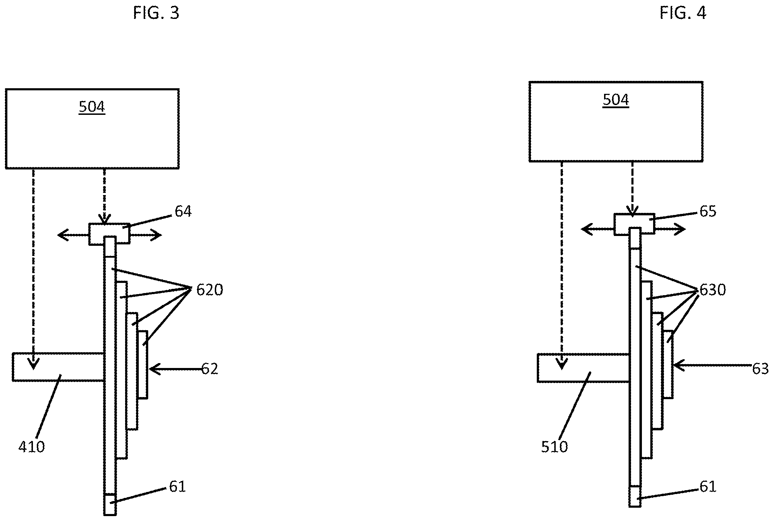

With reference to FIGS. 3 and 4, the speed-governed transmission unit 60 includes the belt 61, a first set of hub gears 62, a second set of hub gears 63, a first mech element 64 and a second mech element 65. The first set of hub gears 62 includes a number of individual hub gears 620 (e.g., four individual hub gears 620) of varying size that are respectively disposed on the first crank-shaft 410. The second set of hub gears 63 includes a number of individual hub gears 630 (e.g., four individual hub gears 630) that are respectively disposed on the second crank-shaft 510. The first mech element 64 may be provided as a derailler, for example, and is disposed to guide the belt 61 between respective engagements with selected ones of the individual hub gears 620 of the first set of hub gears 62. The second mech element 65 may also be provided as a derailler, for example, and is disposed to guide the belt 61 between respective engagements with selected ones of the individual hub gears 630 of the second set of hub gears 63.

Thus, at a low engine 31 speed, the first mech element 64 guides the belt 61 into engagement with a largest-diameter individual hub gear 620 and the second mech element 65 guides the belt 61 into engagement with a smallest-diameter individual hub gear 630 to maintain an operational speed of the compressor 20 at a predefined speed (e.g., a speed that is consistent with the power rating of the compressor 20). Meanwhile, as the engine 31 speeds up, the first mech element 64 guides the belt 61 into sequential engagements with sequentially decreasing diameter individual hub gears 620 and the second mech element 65 guides the belt 61 into sequential engagements with sequentially increasing diameter individual hub gears 630 in order to maintain the operational speed of the compressor 20 at the predefined speed.

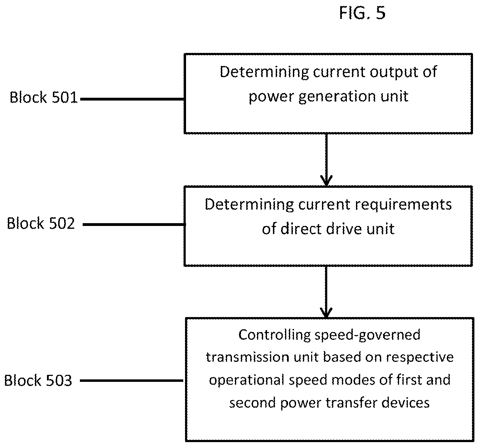

With reference to FIG. 5, a method of operating a direct drive unit compressor system as described above is provided. The method includes determining a current output of the power generation unit 40 in terms of an operational speed mode of a first power transfer device 41 (block 501), determining current requirements of the direct drive unit 50 in terms of an operational speed mode of a second power transfer device 51 (block 502) and controlling the speed-governed transmission unit 60 based on the respective operational speed modes of the first and second power transfer devices (block 503) to thereby proximately satisfy the current requirements of the direct drive unit 50 proximately independently of the current output of the power generation unit 40. The determining of blocks 501 and 502 and the controlling of block 503 may be conducted or accomplished by the first and second gear assemblies 601 and 602 (see FIG. 2) with the need for additional controls or by way of a controller 504 (see FIGS. 3 and 4) that is operably coupled to the first and second power transfer devices 41 and 51 and to the speed-governed transmission unit 60.

Using the speed-governed transmission unit 60 described herein, will permit compressor operations at speeds that are higher than would otherwise be possible during engine idling periods. The TRU 5 will therefore have greater capacity at idle or low engine speeds and it will be relatively easy to recover a temperature set point within the interior 45 of the trailer 4 and to maintain a more constant temperature therein. In addition, the speed-governed transmission unit 60 will prevent or avoid large and quick variations of compressor speeds, so reliability of the compressor 20 will be improved.

## Claims

1. A direct drive unit compressor system (30), comprising:
a power generation unit (40) comprising a truck engine (31), the power generation unit including a first power transfer device (42);
a direct drive unit (50) comprising a driven element, the driven element being a compressor (20), the direct drive unit including a second power transfer device (51) ; and
a speed-governed transmission unit (60) comprising a belt (61) coupled to the first and second power transfer devices,
wherein the speed-governed transmission unit is configured to transmit a substantially constant level of power generated by the power generation unit to the direct drive unit in order to drive operations of the compressor (20) at or near the current requirements thereof independently of the current engine output;
wherein the first power transfer device (41) comprises a first crank-shaft (410), which is rotatable about a first rotational axis, and the second power transfer device (51) comprises a second crank-shaft (510), which is rotatable about a second rotational axis; and
wherein the first crank shaft (410) is rotatable about the first rotational axis at a rotational speed based on the current engine output, and the second crank shaft (510) is rotatable about the second rotational axis at a rotational speed based on the current requirements of the compressor;
the system **characterized in that** the first power transfer device (41) is operable at varying speed modes (411 ,412 ,413 ,414 ) based on current engine (31) output; and the second power transfer device (51) is operable at varying speed modes (511 ,512 ,513 ,514 ) based on current requirements of the compressor, and **in that** the speed-governed transmission unit (60) further comprises :
first and second sets of hub gears (62,63) of varying size disposed on the first and second crank-shafts (410,510), respectively; and
first and second mech elements (64,65) disposed to guide the belt between selected ones of the hub gears of the first and second sets of hub gears, respectively.

2. The system according to claim 1, wherein the compressor (20) is a compressor of an air conditioning system.

3. The system according to claim 1, wherein:
the first set of hub gears (62) comprises four individual hub gears (620) of increasing diameter, and
the second set of hub gears (63) comprises four individual hub gears (630) of decreasing diameter;
wherein the first mech element (64) comprises a derailler disposed to guide the belt (61) between respective engagements with selected ones of the individual hub gears (620) of the first set of hub gears (62); and
wherein the second mech element (65) comprises a derailler disposed to guide the belt (61) between respective engagements with selected ones of the individual hub gears (630) of the second set of hub gears (63).

4. A method of operating a direct drive unit compressor system (30), according to claim 1, the method comprising:
determining a current output of a power generation unit (40) comprising a truck engine (31) in terms of an operational speed mode of a first power transfer device (41);
determining current requirements of a compressor (20) of a direct drive unit (50) in terms of an operational speed mode of a second power transfer device (51); and
controlling a speed-governed transmission unit (60) to transmit a substantially constant level of power generated by the power generation unit to the direct drive unit based on the respective operational speed modes of the first and second power transfer devices in order to drive operations of the compressor (20) at or near the current requirements thereof independently of the current output of the power generation unit;
wherein the first power transfer device (41) comprises a first crank-shaft (410), which is rotatable about a first rotational axis, and the second power transfer device (51) comprises a second crank-shaft (510), which is rotatable about a second rotational axis; and
wherein the first crank shaft (410) rotates about the first rotational axis at a rotational speed based on the current engine output, and the second crank shaft (510) is rotatable about the second rotational axis at a rotational speed based on the current requirements of the compressor.

## Patentansprüche

1. Direktantriebseinheitskompressorsystem (30), umfassend:
eine Leistungserzeugungseinheit (40), die einen Lastkraftwagenmotor (31) umfasst, wobei die Leistungserzeugungseinheit eine erste Leistungstransfervorrichtung (4) beinhaltet;
eine Direktantriebseinheit (50), die ein angetriebenes Element umfasst, wobei das angetriebene Element ein Kompressor (20) ist, wobei die Direktantriebseinheit eine zweite Leistungstransfervorrichtung (51) beinhaltet;
eine geschwindigkeitsgeregelte Übertragungseinheit (60), die einen Riemen (61) mit der ersten und zweiten Leistungstransfervorrichtung gekoppelt umfasst,
wobei die geschwindigkeitsgeregelte Übertragungseinheit dazu ausgelegt ist, einen im Wesentlichen konstanten Leistungspegel, der von der Leistungserzeugungseinheit erzeugt wird, an die Direktantriebseinheit zu übertragen, um Betriebe des Kompressors (20) bei oder nahe den aktuellen Anforderungen, unabhängig von dem aktuellen Motorausgang anzutreiben;
wobei die erste Leistungstransfervorrichtung (41) eine erste Kurbelwelle (410), die um eine erste Drehachse drehbar ist, umfasst und die zweite Leistungstransfervorrichtung (51) eine zweite Kurbelwelle (510), die um eine zweite Drehachse drehbar ist, umfasst; und
wobei die erste Kurbelwelle (410) um die erste Drehachse bei einer Drehgeschwindigkeit, die auf dem aktuellen Motorausgang basiert, drehbar ist und die zweite Kurbelwelle (510) um die zweite Drehachse bei einer Drehgeschwindigkeit, die auf den aktuellen Anforderungen des Kompressors basiert, drehbar ist;
das System **dadurch gekennzeichnet, dass** die erste Leistungstransfervorrichtung (41) in verschiedenen Geschwindigkeitsmodi (411, 412, 413, 414), die auf aktuellem Motor- (31) -ausgang basieren, betrieben werden kann; und die zweite Leistungstransfervorrichtung (51) in unterschiedlichen Geschwindigkeitsmodi (511, 512, 513, 514), die auf aktuellen Anforderungen des Kompressors basieren, betrieben werden kann, und dadurch, dass die geschwindigkeitsgeregelte Übertragungseinheit (60) weiter umfasst:
einen ersten und zweiten Satz Nabengetrieberäder (62, 63) verschiedener Größe, die an der ersten beziehungsweise zweiten Kurbelwelle (410, 510) angeordnet sind; und
erste und zweite Schaltelemente (64, 65), die angeordnet sind, den Riemen zwischen ausgewählten der Nabengetrieberäder des ersten beziehungsweise zweiten Satzes Nabengetrieberäder zu führen.

2. System nach Anspruch 1, wobei der Kompressor (20) ein Kompressor eines Klimatisierungssystems ist.

3. System nach Anspruch 1, wobei:
der erste Satz Nabengetrieberäder (62) vier individuelle Nabengetrieberäder (620) mit zunehmendem Durchmesser umfasst, und
der zweite Satz Nabengetrieberäder (63) vier individuelle Nabengetrieberäder (630) mit abnehmendem Durchmesser umfasst;
wobei das erste Schaltelement (64) einen Umwerfer umfasst, der angeordnet ist, den Riemen (61) zwischen jeweiligen Eingriffen mit ausgewählten der individuellen Nabengetrieberäder (620) des ersten Satzes Nabengetrieberäder (62) zu führen; und
wobei das zweite Schaltelement (65) einen Umwerfer umfasst, der angeordnet ist, den Riemen (61) zwischen jeweiligen Eingriffen mit ausgewählten der individuellen Nabengetrieberäder (630) des zweiten Satzes Nabengetrieberäder (63) zu führen.

4. Verfahren zum Betreiben eines Direktantriebseinheitskompressorsystems (30) nach Anspruch 1, wobei das Verfahren umfasst:
Ermitteln eines aktuellen Ausgangs einer Leistungserzeugungseinheit (40), die einen Lastkraftwagenmotor (31) umfasst, im Sinne eines Betriebsgeschwindigkeitsmodus einer ersten Leistungstransfervorrichtung (41);
Ermitteln von aktuellen Anforderungen eines Kompressors (20) einer Direktantriebseinheit (50) im Sinne eines Betriebsgeschwindigkeitsmodus einer zweiten Leistungstransfervorrichtung (51); und
Steuern einer geschwindigkeitsgeregelten Übertragungseinheit (60), einen im Wesentlichen konstanten Leistungspegel, der von der Leistungserzeugungseinheit erzeugt wird, an die Direktantriebseinheit basierend auf den jeweiligen Betriebsgeschwindigkeitsmodi der ersten und zweiten Leistungstransfervorrichtung zu übertragen, um Betriebe des Kompressors (20) bei oder nahe den aktuellen Anforderungen davon, unabhängig von dem aktuellen Ausgang der Leistungserzeugungseinheit anzutreiben;
wobei die erste Leistungstransfervorrichtung (41) eine erste Kurbelwelle (410), die um eine erste Drehachse drehbar ist, umfasst und die zweite Leistungstransfervorrichtung (51) eine zweite Kurbelwelle (510), die um eine zweite Drehachse drehbar ist, umfasst; und
wobei die erste Kurbelwelle (410) sich um die erste Drehachse bei einer Drehgeschwindigkeit, die auf dem aktuellen Motorausgang basiert, dreht und die zweite Kurbelwelle (510) um die zweite Drehachse bei einer Drehgeschwindigkeit, die auf den aktuellen Anforderungen des Kompressors basiert, drehbar ist.

## Revendications

1. Système de compresseur à unité d'entraînement direct (30), comprenant :
une unité de production d'énergie (40) comprenant un moteur de camion (31), l'unité de production d'énergie incluant un premier dispositif de transfert d'énergie (41) ;
une unité d'entraînement direct (50) comprenant un élément entraîné, l'élément entraîné étant un compresseur (20), l'unité d'entraînement direct incluant un second dispositif de transfert d'énergie (51) ;
une unité de transmission régie par la vitesse (60) comprenant une courroie (61) accouplée aux premier et second dispositifs de transfert d'énergie,
dans lequel l'unité de transmission régie par la vitesse est configurée pour transmettre un niveau sensiblement constant d'énergie produite par l'unité de production d'énergie à l'unité d'entraînement direct afin d'entraîner des opérations du compresseur (20) à ou près des exigences courantes de celui-ci indépendamment du rendement de moteur courant ;
dans lequel le premier dispositif de transfert d'énergie (41) comprend un premier vilebrequin (410), qui peut tourner autour d'un premier axe de rotation, et le second dispositif de transfert d'énergie (51) comprend un second vilebrequin (510), qui peut tourner autour d'un second axe de rotation ; et
dans lequel le premier vilebrequin (410) peut tourner autour du premier axe de rotation à une vitesse de rotation basée sur le rendement de moteur courant, et le second vilebrequin (510) peut tourner autour du second axe de rotation à une vitesse de rotation basée sur les exigences courantes du compresseur ;
le système étant **caractérisé en ce que** le premier dispositif de transfert d'énergie (41) peut fonctionner à des modes de vitesse variables (411, 412, 413, 414) basés sur un rendement de moteur (31) courant ; et le second dispositif de transfert d'énergie (51) peut fonctionner à des modes de vitesse variables (511, 512, 513, 514) basés sur des exigences courantes du compresseur, et **en ce que** l'unité de transmission régie par la vitesse (60) comprend en outre :
des premier et second ensembles de moyeux à vitesses intégrées (62, 63) de taille variable disposés sur les premier et second vilebrequins (410, 510), respectivement ; et
des premier et second éléments mécaniques (64, 65) disposés pour guider la courroie entre des sélectionnés parmi les moyeux à vitesses intégrées des premier et second ensembles de moyeux à vitesses intégrées, respectivement.

2. Système selon la revendication 1, dans lequel le compresseur (20) est un compresseur d'un système de climatisation.

3. Système selon la revendication 1, dans lequel :
le premier ensemble de moyeux à vitesses intégrées (62) comprend quatre moyeux à vitesses intégrées individuels (620) de diamètre croissant, et
le second ensemble de moyeux à vitesses intégrées (63) comprend quatre moyeux à vitesses intégrées individuels (630) de diamètre décroissant ;
dans lequel le premier élément mécanique (64) comprend un dérailleur disposé pour guider la courroie (61) entre des mises en prise respectives avec des sélectionnés parmi les moyeux à vitesses intégrées individuels (620) du premier ensemble de moyeux à vitesses intégrées (62) ; et
dans lequel le second élément mécanique (65) comprend un dérailleur disposé pour guider la courroie (61) entre des mises en prise respectives avec des sélectionnés parmi les moyeux à vitesses intégrées individuels (630) du second ensemble de moyeux à vitesses intégrées (63).

4. Procédé de fonctionnement d'un système de compresseur à unité d'entraînement direct (30) selon la revendication 1, le procédé comprenant :
une détermination d'un rendement courant d'une unité de production d'énergie (40) comprenant un moteur de camion (31) selon un mode de vitesse de fonctionnement d'un premier dispositif de transfert d'énergie (41) ;
une détermination d'exigences courantes d'un compresseur (20) d'une unité d'entraînement direct (50) selon un mode de vitesse de fonctionnement d'un second dispositif de transfert d'énergie (51) ; et
une commande d'une unité de transmission régie par la vitesse (60) pour transmettre un niveau sensiblement constant d'énergie produite par l'unité de production d'énergie à l'unité d'entraînement direct sur la base des modes de vitesse de fonctionnement respectifs des premier et second dispositifs de transfert d'énergie afin d'entraîner des opérations du compresseur (20) à ou près des exigences courantes de celui-ci indépendamment du rendement courant de l'unité de production d'énergie ;
dans lequel le premier dispositif de transfert d'énergie (41) comprend un premier vilebrequin (410), qui peut tourner autour d'un premier axe de rotation, et le second dispositif de transfert d'énergie (51) comprend un second vilebrequin (510), qui peut tourner autour d'un second axe de rotation ; et
dans lequel le premier vilebrequin (410) tourne autour du premier axe de rotation à une vitesse de rotation basée sur le rendement de moteur courant, et le second vilebrequin (510) peut tourner autour du second axe de rotation à une vitesse de rotation basée sur les exigences courantes du compresseur.
